# EUROPÄISCHE PATENTSCHRIFT

(11) **EP 2 708 349 B1**
(45) Veröffentlichungstag und Bekanntmachung des Hinweises auf die Patenterteilung: **21.10.2015**
(21) Anmeldenummer: 13184282.5
(22) Anmeldetag: 13.09.2013
(51) Int. Cl.: B29C 70/54, B29C 37/00, B29C 33/30

(54) **Formwerkzeug und Verfahren zur Herstellung eines Faserverbundbauteils**
Moulding tool and method for manufacturing a fibre reinforced composite article
Outil de formage et procédé de fabrication d'une pièce composite renforcée par des fibres

(30) Priorität: 14.09.2012 DE 102012108633
(43) Veröffentlichungstag der Anmeldung: 19.03.2014
(73) Patentinhaber: Deutsches Zentrum für Luft- und Raumfahrt e.V., 51147 Köln (DE)
(72) Erfinder: Grote, Matthias, 49809 Lingen (DE)
(74) Vertreter: Kröncke, Rolf

(56) Entgegenhaltungen:
- WO-A1-2011/048376
- CA-A1- 2 551 728
- US-A1- 2005 173 820

## Beschreibung

Die Erfindung betrifft ein Formwerkzeug zur Herstellung eines Faserverbundbauteils mit einer Mehrzahl von separaten Werkzeugelementen, die zumindest zur teilweisen Formgebung des herzustellenden Faserverbundbauteils vorgesehen und entsprechend der Form des herzustellenden Faserverbundbauteils zu dem Formwerkzeug zusammensetzbar sind. Die Erfindung betrifft ebenfalls ein Verfahren zur Herstellung eines Faserverbundbauteils mit einem solchen Formwerkzeug hierzu.

Mit zunehmender Leichtbauanforderung werden in der Luft- und Raumfahrt sowie dem Fahrzeugbau verstärkt Faserverbundwerkstoffe eingesetzt. Um die exzellenten Eigenschaften von Faserverbundwerkstoffen jedoch voll ausnutzen zu können, müssen die Bauteile in einer hochintegralen Bauweise gefertigt werden, was insbesondere bei großen und komplexen Bauteilen, wie beispielsweise einer Flügelschale erhebliche Anforderungen an den Fertigungsprozess stellt.

Bei der Herstellung solcher Faserverbundbauteile werden in der Regel Faserhalbzeuge (trocken oder vorgetränkt) in ein Formwerkzeug eingebracht und, sofern noch nicht geschehen, mit einem Matrixharz injiziert. Das mit einem Matrixharz infiltrierte Faserhalbzeug wird dann durch Beaufschlagung von Temperatur und meist auch Druck ausgehärtet, so dass sich ein integrales und komplexes Bauteil aus faserverstärktem Kunststoff ergibt. Anschließend, nachdem das Bauteil ausgehärtet und auf eine entsprechende Temperatur abgekühlt ist, erfolgt die Entformung aus dem Formwerkzeug.

Das Formwerkzeug dient bei dem Herstellungsprozess dabei dazu, dem herzustellenden Bauteil seine spätere Form zu geben, wobei die Oberfläche des Formwerkzeuges die spätere Bauteilstruktur vorgibt.

Je komplexer und größer das Bauteil ist, desto komplexer werden auch die hierfür notwendigen Formwerkzeuge. Dabei geht man neuerdings insbesondere bei komplexen großen Bauteilen dazu über, die notwendigen Formwerkzeuge aus einer Vielzahl von einzelnen Werkzeugelementen zusammenzusetzen, wobei erst durch das vollständige Zusammensetzen aller Werkzeugelemente das vollständige Formwerkzeug mit seiner formgebenden Struktur gebildet wird.

An dem oben genannten Beispiel einer Flügelschale, die bei heutigen Verkehrsflugzeugen eine Fläche von bis zu 150 m² besitzen können, bedeutet dies für den Fertigungsprozess, dass ein solches aus mehreren Teilen zusammengesetztes Formwerkzeug für derartige Flügelschalen überschlägig auf bis zu 3000 Einzelteile kommen kann.

Aus der nachveröffentlichten DE 10 2012 103 674.8 ist beispielsweise ein aus mehreren Werkzeugteilen bestehendes Formwerkzeug bekannt, das für den endgültigen Fertigungsprozess, bei dem das in das Formwerkzeug eingebrachte Faserhalbzeug ausgehärtet wird, zusammengesetzt wird. Über ein an der oberen Seite eines der Werkzeugteile befindlichen Öffnung kann dann die in einem Autoklaven zirkulierende warme Luft zur Temperierung in einen Hohlraum umgeleitet werden, um so das innen liegende Faserhalbzeug besser temperieren zu können.

CA-2551728 offenbart die Merkmale der Oberbegriffe der Ansprüche 1 und 9.

Ein großer Nachteil bei großen und komplexen Bauteilen besteht meist darin, dass enge Fertigungstoleranzen (ca. 1/10mm) eingehalten werden müssen, um den hohen Qualitätsanforderungen zu genügen. Bei Formwerkzeugen, die aus einer Vielzahl von Werkzeugteilen bestehen, ist es daher in der Praxis sehr schwierig, diese Fertigungstoleranzen einzuhalten, wobei insbesondere hierbei berücksichtigt werden muss, dass auf Grund der enormen Bauteilkosten der Fertigungsprozess möglichst ohne Ausschuss durchgeführt werden sollte.

Durch die während des Aushärtungsprozesses entstehende Reaktion des Matrixharzes entstehen jedoch gerade bei großen und komplexen Bauteilen im inneren Material Spannungen, die zu einer Abweichung außerhalb der Fertigungstoleranz führen können. Zwar wird der aus dem Stand der Technik bekannte Herstellungsprozess hinsichtlich seines Druck- und Temperaturverlaufes zentral überwacht, so dass Abweichungen hiervon zu einer Korrektur führen können. Bei großen und komplexen Bauteilen kommt es jedoch häufig nur zu örtlich begrenzten Abweichungen der Prozessparameter, die im zentralen Überwachungsprozess nicht berücksichtigt werden können und dennoch häufig zum Ausschuss des gesamten Großbauteils führen.

Vor diesem Hintergrund ist es Aufgabe der vorliegenden Erfindung, ein verbessertes Formwerkzeug zur Herstellung eines Faserverbundbauteils der eingangs genannten Art sowie ein Verfahren zur Herstellung eines Faserverbundbauteils anzugeben, mit dem auch bei großen und komplexen Bauteilen die engen Fertigungstoleranzen überwacht und eingehalten werden können, um so den Fertigungsprozess möglichst ohne Ausschuss sicherstellen zu können. Es ist ebenfalls Aufgabe der vorliegenden Erfindung ein Formwerkzeug und ein entsprechendes Verfahrens zur Herstellung eines Faserverbundbauteils hierzu anzugeben, mit dem bei großen komplexen Bauteilen die Bauteilkosten hierdurch reduziert werden können.

Die Aufgabe wird mit dem Formwerkzeug der eingangs genannten Art erfindungsgemäß durch die kennzeichnenden Merkmale des Patentanspruches 1 gelöst. Die Aufgabe wird ebenfalls mit dem Verfahren der eingangs genannten Art und den Merkmalen des Patentanspruches 8 erfindungsgemäß gelöst. Demnach wird vorgeschlagen, dass die Werkzeugelemente eines aus mehreren separaten Werkzeugelementen zusammengesetzten Formwerkzeuges jeweils ein Sensorsystem mit wenigstens einem Sensor und eine Kommunikationseinheit aufweisen. Das Sensorsystem mit dem wenigstens einen Sensor ist dabei derart eingerichtet, dass es herstellungs- und/oder bauteilrelevante Prozessparameter bei der Herstellung des Faserverbundbauteils erfasst, wobei die erfassten Prozessparameter dann mit Hilfe der Kommunikationseinheit an andere Werkzeugelemente übertragen und ausgetauscht werden können. So ist die Kommunikationseinheit so ausgebildet, dass die von dem Sensorsystem des jeweiligen Werkzeugelementes erfassten Prozessparameter an andere Werkzeugelemente ausgesendet werden und von anderen Werkzeugelementen erfasste und mit Hilfe der jeweiligen Kommunikationseinheit ausgesendeten Prozessparameter empfangbar sind.

Mit Hilfe eines derartig zellulär aufgebauten Formwerkzeuges kann der Herstellungsprozess vollständig, umfassend und dezentral überwacht werden, wobei durch das Aussenden der lokal erfassten Prozessparameter eines Werkzeugelementes an die anderen Werkzeugelemente ein umfassendes Gesamtsituationsbewusstsein entsteht, auf dessen Grundlage dann auf entsprechende Abweichungen schneller und gezielter reagiert werden kann. Denn anders als beispielsweise durch Thermofühler, die punktuell an dem Werkzeug befestigt und von einem zentralen Computer ausgewertet werden, erfolgt die Überwachung der Prozessparameter nunmehr dezentral, so dass das gesamte Bauteil während des Herstellungsprozesses lückenlos überwacht werden kann.

Auf Grund der Tatsache, dass die Prozessparameter, erfasst durch das Sensorsystem eines Werkzeugelementes, an die anderen Werkzeugelemente ausgesendet werden, können die Werkzeugelemente auf sich verändernde Situationen gemeinsam reagieren, um so die engen Fertigungstoleranzen lückenlos zu überwachen und entsprechend einhalten zu können.

Durch den Austausch von Prozessparametern der Werkzeugelemente untereinander kann das Formwerkzeug die gesamte Situation des Herstellungsprozesses erfassen und so durch Kooperation der einzelnen Werkzeugelemente miteinander die entsprechenden Aufgaben während des Herstellungsprozesses gemeinschaftlich lösen.

Vorteilhafterweise ist der Sensor des jeweiligen Sensorsystems eines der Werkzeugelemente derart ausgebildet, dass er die Temperatur, den vorherrschenden Druck sowie die Dichtigkeit gegenüber der Umgebung als herstellungs- und/oder bauteilrelevante Prozessparameter erfassen kann. Denkbar ist aber auch, dass der Sensor zur Ermittlung einer Position des Werkzeugelementes im Formwerkzeug, der Ausrichtung des Werkzeugelementes im Formwerkzeug, der Anzahl der abgelegten Faserlagen und/oder einer Veränderung der Geometrie des Werkzeugelementes als herstellungs- und/oder bauteilrelevante Prozessparameter ausgebildet ist.

So ist es beispielsweise möglich, dass mit Hilfe von piezoelektrischen Sensoren eine Verformung des Werkzeugelementes während des Herstellungsprozesses erkennbar ist, so dass bereits während des Herstellungsprozesses lokal im Bereich des jeweiligen Werkzeugelementes feststellbar ist, ob die Verformung noch innerhalb der engen Toleranzgrenzen liegt oder bereits außerhalb. Eine solche Verformung kann beispielsweise durch Spannungen innerhalb des Bauteils während der Aushärtung herrühren.

Mit Hilfe der Temperatur und/oder des Druckes kann beispielsweise lokal erfasst werden, inwieweit hier die vorgegebenen Randbedingungen des Herstellungsprozesses eingehalten werden.

Ganz besonders vorteilhaft ist es nun, wenn zumindest ein Teil der Werkzeugelemente Mittel zum Beeinflussen zumindest eine herstellungs- und/oder bauteilrelevanten Prozessparameters und eine Steuereinheit aufweisen, so dass mit Hilfe der Steuereinheit die Mittel derart angesteuert werden können, dass während des Herstellungsprozesses in Abhängigkeit von den durch die Kommunikationseinheit empfangenen Prozessparameter anderer Werkzeugelemente die Prozessparameter beeinflusst werden können.

Hierdurch wird es möglich, dass die Werkzeugelemente miteinander eine kooperative Einheit bilden, die durch das Erfassen der Prozessparameter den Herstellungsprozess voll umfänglich und dezentral überwachen und bei festgestellten Abweichungen entsprechende Maßnahmen einleiten, um die Herstellung eines fehlerhaften Bauteils zu vermeiden. Damit arbeiten die Werkzeugelemente kooperativ auf einer höheren Ebene so zusammen, dass sie gemeinsam die bei der Herstellung eines Faserverbundbauteils anfallenden Aufgaben hinsichtlich der Überwachung der Prozessgrößen übernehmen und so insgesamt Aufgaben erledigen können, die weder zentral gesteuert noch jedes Werkzeugelement für sich alleine bewältigen könnte.

Vorteilhafterweise fällt bei einer derartigen Kooperation von Werkzeugelementen eine zentrale Überwachung weg, so dass insbesondere bei großen komplexen Bauteilen nicht nur die notwendigen Fehlertoleranzgrenzen eingehalten werden können, sondern auch Bauteilkosten gespart werden können, da Ausschuss reduziert werden kann.

So ist es beispielsweise denkbar, dass die Werkzeugelemente Piezoaktuatoren als Mittel zur Beeinflussung aufweisen, die so eingerichtet und an dem Werkzeugelement angeordnet sind, dass bei entsprechender Ansteuerung in einem gewissen Maße die Geometrie bzw. Form des Werkzeugelementes veränderbar ist. So ist es beispielsweise möglich, dass mit Hilfe eines derartigen Piezoaktuators die längliche Form eines Werkzeugelementes in eine Richtung leicht krümmbar ist, beispielsweise 1/10 mm. Je nach erfassten Prozessparametern der anderen Werkzeugteile steuert die Steuereinheit die Piezoaktuatoren nun derart an, dass die Form so verändert wird, dass das Bauteil noch innerhalb der Fehlertoleranzgrenzen liegt. Durch die Kooperation der Werkzeugelemente untereinander wird dabei erreicht, dass selbst bei größeren, erfassten Abweichungen durch das Zusammenwirken aller Werkzeugelemente auch eine größere Formkorrektur erreichbar ist. Ein Werkzeugelement allein könnte bei einer größeren Formabweichung diese Toleranzgrenze möglicherweise nicht mehr korrigieren.

Des Weiteren ist es besonders vorteilhaft, wenn die Werkzeugelemente Mittel zum Beeinflussen der Temperatur aufweisen und die Steuereinheit so eingerichtet ist, dass in Abhängigkeit der erfassten Prozessparameter der anderen Werkzeugelemente eine Beeinflussung der Temperatur im Bereich des jeweiligen Werkzeugelementes erfolgt. So ist es beispielsweise denkbar, dass bei Feststellung eines Temperaturabfalles in einem Bereich des Formwerkzeuges und der damit bestehenden Gefahr, dass hier der Herstellungsprozess fehlerhaft verläuft, die Temperierung dieses Werkzeugelementes und der umgebenden Werkzeugelemente erhöht wird, während in anderen Bereichen die Temperierung heruntergefahren wird, um eine Überhitzung zu vermeiden.

So kann die Steuereinheit beispielsweise bei Werkzeugelementen, die einen Hohlraum aufweisen und über eine Öffnung Warmluft in das Innere des Werkzeugelementes einleiten können, um so das Werkzeugelement zu temperieren, die hierfür vorgesehenen Einströmventile von der Steuereinheit so angesteuert werden, dass bei Überhitzung die Ventile in einem Bereich geschlossen werden, während sie in anderen Bereichen geöffnet werden, um so eine gleichmäßige Verteilung der Temperierung zu ermöglichen. Dabei erfolgt dies kooperativ durch die Werkzeugelemente untereinander selbstständig, ohne dass hierfür eine übergeordnete zentrale Steuerung notwendig ist.

Die Erfindung wird anhand der beigefügten Figur beispielhaft näher erläutert. Es zeigt:

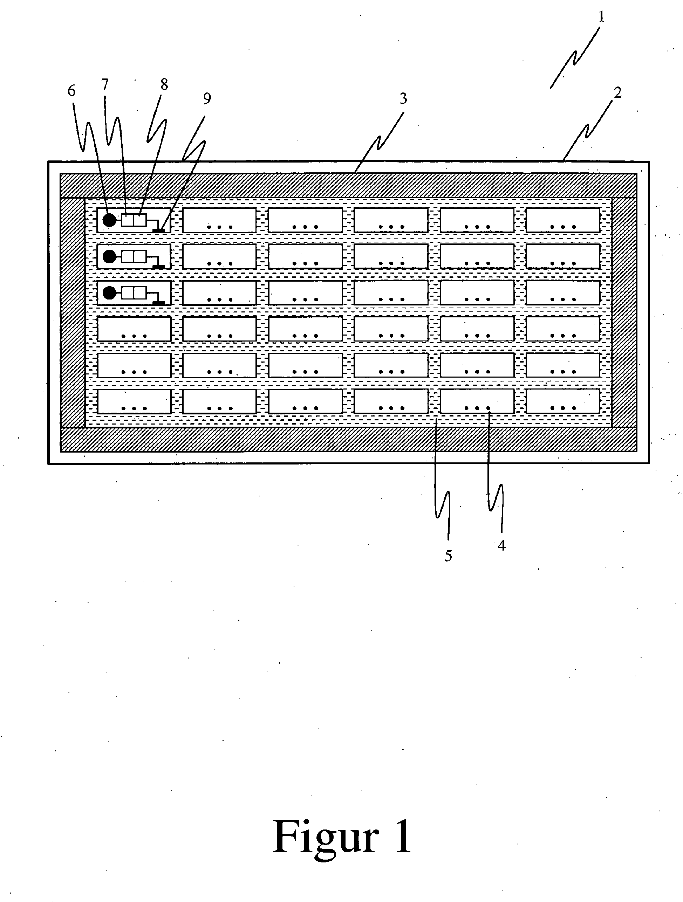

- Figur 1: - Schematische Darstellung einer Draufsicht auf ein Formwerkzeug.

Figur 1 zeigt in einer schematischen Darstellung die Draufsicht auf ein Formwerkzeug 1, das für die spätere Herstellung mit einer nicht dargestellten Platte abgedeckt wird, um das Bauteil auszuhärten. Das Formwerkzeug 1 weist eine formgebende Basisplatte 2 auf, die zumindest teilweise formgebende Strukturen für das spätere Bauteil hat. Auf dieser Basisplatte 2 werden umlaufende Rahmenelemente 3 angeordnet, die als Werkzeugelemente die räumliche Ausdehnung des späteren Bauteils limitieren.

In dem durch die Rahmenelemente 3 gebildeten inneren Bereich des Formwerkzeuges 1 werden nun eine Vielzahl von innen liegenden Werkzeugelementen 4 angeordnet, zwischen denen das Faserhalbzeug 5 angeordnet und eingebracht ist. Die Werkzeugelemente 4 sind dabei quaderförmig ausgebildet, so dass sich zwischen zwei benachbarten Werkzeugelementen 4 ein mit einem Faserhalbzeug 5 gefüllter Bereich bildet. Wird das mit einem Matrixharz infiltrierte Faserhalbzeug 5 später ausgehärtet, so bilden sich über das gesamte Bauteil hinweg auf Grund der innen liegenden Werkzeugelemente 4 so genannte "Stringer", die wesentlich zur Stabilität eines großen um komplexen Faserverbundbauteils beitragen.

Die innen liegenden Werkzeugelemente 4 sind dabei im Ausführungsbeispiel der Figur 1 nahezu identisch ausgebildet, so dass der weitere Aufbau eines solchen Werkzeugelementes 4 an einem Beispiel erläutert werden kann. Das Werkzeugelement 4 weist ein Sensorsystem mit einem Sensor 6 auf, der mit einer Kommunikationseinheit 7 signaltechnisch verbunden ist. Der Sensor 6, in der Figur 1 schematisch durch einen Punkt dargestellt, ist derart eingerichtet, dass herstellungs- und/oder bauteilrelevante Prozessparameter erfassbar sind. Solche Prozessparameter können beispielsweise die Temperatur des Drucks, die Position des Werkzeugelementes 4, die Ausrichtung des Werkzeugelementes, die Anzahl der abgelegten Faserlagen sowie eine Veränderung Geometrie des Werkzeugelementes sein.

Diese von dem Sensor 6 erfassten Prozessparameter werden dann mit Hilfe der Kommunikationseinheit 7 an andere Werkzeugelemente 4 und den Kommunikationseinheiten übertragen, wobei nicht jedes Werkzeugelement 4 auch die gleichen Prozessparameter mit Hilfe des Sensors 6 erfassen muss.

Mittels einer in den Werkzeugelementen 7 angeordneten Steuereinheit 8 lassen sich dann entsprechende Beeinflussungsmittel 9 ansteuern, um beispielsweise bestimmte Prozessparameter zu beeinflussen. Die Steuereinheit 8 ist dabei mit der Kommunikationseinheit 7 signaltechnisch verbunden und kann die von der Kommunikationseinheit 7 empfangenen Prozessparameter anderer Werkzeugelemente 4 abgreifen und so verarbeiten, dass die Beeinflussungsmittel 9 entsprechend angesteuert werden.

So können die Beeinflussungsmittel 9 beispielsweise Piezoaktuatoren sein, die es ermöglichen, dass sich das Werkzeugelement 4 bezüglich seiner Geometrie leicht verändern kann (beispielsweise im Bereich von 1/10 mm). Hierdurch können während des Herstellungsprozesses entstehende Abweichungen von den Fertigungstoleranzen korrigiert werden, so dass trotz der Abweichung ein qualitativ hochwertiges Bauteil herstellbar ist, das den Sicherheitsanforderungen genügt.

Denkbar ist aber auch, dass die Beeinflussungsmittel im Temperierelemente sind, mit denen die Steuereinheit das Werkzeugelement 4 entsprechend temperieren kann. Hierdurch lassen sich Temperaturunterschiede innerhalb des Bauteils, die insbesondere bei großen und komplexen Bauteilen sehr häufig auftreten, ausgleichen, wobei auf Grund der Kooperation der Werkzeugelemente 4 untereinander eine Überhitzung des gesamten Bauteils vermieden wird. So erhält die Kommunikationseinheit 7 eines Werkzeugelementes die Prozessparameter eines anderen Werkzeugelementes und kann so feststellen, dass in dem anderen Bereich eine Überhitzung droht, während in dem Bereich des Werkzeugelementes eine Unterkühlung droht. Auf Grund der kooperativen Zusammenarbeit erfolgt nun eine Temperierung des einen Werkzeugelementes in die Richtung, dass die Temperatur angehoben wird, während das andere Werkzeugelement sich so temperiert, dass die Temperatur in diesem Bereich gesenkt wird.

Arbeiten alle Werkzeugelemente 4 des Formwerkzeuges 1 auf diese Art zusammen, so ergibt sich ein kooperativer Verbund von Werkzeugelementen, die zusammen die entsprechenden Prozessparameter beeinflussen und so die Aufgabe zur Herstellung des Faserverbundbauteils gemeinsam lösen.

Wurde beispielsweise eine Abweichung der Fertigungstoleranz in einer Größenordnung festgestellt, die ein Werkzeugelement nicht mehr selbstständig korrigieren kann, so arbeiten die Werkzeugelemente 4 kooperativ gemeinsam so zusammen, dass sie alle für sich in einem geringen Maße ihre Geometrie verändern, wobei sich dann in der Summe der Geometrieänderungen eine größere Korrektur hinsichtlich der Fehlertoleranzen ergibt.

Die in Figur 1 dargestellten Rahmenelemente 3 können dabei beispielsweise ebenso ausgestaltet sein, wie die innen liegenden Werkzeugelemente 4, wobei die verwendeten Sensoren 6 je nach Aufgabe der entsprechenden Werkzeugelemente spezielle Fähigkeiten haben können. So ist es beispielsweise denkbar, dass die Rahmenelemente 3 Sensoren aufweisen, mit denen die Dichtigkeit gegenüber der Umgebung bestimmt werden kann.

Die in dem Formwerkzeug 1 verwendeten Werkzeugelemente 4 bilden somit einen Verbund zellulärer Werkzeugelemente, die lokal und örtlich begrenzt die herstellungs- und/oder bauteilrelevanten Prozessparameter beeinflussen können. Die Werkzeugelemente 4 wirken somit kooperativ zusammen.

## Patentansprüche

1. Formwerkzeug (1) zur Herstellung eines Faserverbundbauteils mit einer Mehrzahl von separaten Werkzeugelementen (3, 4), die zumindest zur teilweisen Formgebung des herzustellenden Faserverbundbauteils vorgesehen und entsprechend der Form des herzustellenden Faserverbundbauteils zu dem Formwerkzeug (1) zusammensetzbar sind, wobei die Werkzeugelemente (3, 4) jeweils ein Sensorsystem mit wenigstens einem Sensor (6), der zum Erfassen von herstellungs- und/oder bauteilrelevanten Prozessparametern bei der Herstellung des Faserverbundbauteils ausgebildet ist, **dadurch gekennzeichnet, dass** die Werkzeugelemente (3,4) jeweils eine Kommunikationseinheit (7) aufweisen, die eingerichtet ist, erfasste Prozessparameter an Kommunikationseinheiten (7) anderer Werkzeugelemente (3, 4) zu senden und/oder erfasste Prozessparameter anderer Werkzeugelemente (3, 4), die von den jeweiligen Kommunikationseinheiten (7) der anderen Werkzeugelemente (3, 4) ausgesendet wurden, zu empfangen.

2. Formwerkzeug (1) nach Anspruch 1, **dadurch gekennzeichnet, dass** der Sensor (6) der jeweiligen Sensorsysteme der Werkzeugelemente (3, 4) zum Erfassen der Temperatur, des Druckes, die Dichtigkeit gegenüber der Umgebung, der Position des Werkzeugelementes im Formwerkzeug, der Ausrichtung des Werkzeugelementes im Formwerkzeug, der Anzahl der abgelegten Faserlagen und/oder einer Veränderung der Geometrie des Werkzeugelementes als herstellungs- und/oder bauteilrelevante Prozessparameter eingerichtet ist.

3. Formwerkzeug (1) nach Anspruch 1 oder 2, **dadurch gekennzeichnet, dass** zumindest ein Teil der Werkzeugelemente (3, 4) jeweils Mittel (9) zur Beeinflussung mindestens eines herstellungs- und/oder bauteilrelevanten Prozessparameters und eine Steuereinheit (8) aufweisen, die zur Ansteuerung der Mittel des jeweiligen Werkzeugelementes (3, 4) in Abhängigkeit von den durch die Kommunikationseinheit (7) empfangenen Prozessparametern anderer Werkzeugelemente zur Beeinflussung des mindestens einen herstellungs- und/oder bauteilrelevanten Prozessparameters eingerichtet ist.

4. Formwerkzeug (1) nach Anspruch 3, **dadurch gekennzeichnet, dass** die Steuereinheiten (8) der Werkzeugelemente (3, 4) über die Kommunikationseinheiten (7) derart miteinander zusammenwirken, dass die Mittel (9) der Werkzeugelemente (3, 4) zur Einhaltung und/oder Korrektur von Fertigungstoleranzen die herstellungs- und/oder bauteilrelevanten Prozessparameter gemeinsam beeinflussen.

5. Formwerkzeug (1) nach Anspruch 3 oder 4, **dadurch gekennzeichnet, dass** zumindest ein Teil der Werkzeugelemente (3, 4) jeweils Mittel (9) zur Veränderung der Form des Werkzeugelementes (3, 4) aufweisen und die Steuereinheit der jeweiligen Werkzeugelemente eingerichtet ist, die Mittel zur Veränderung der Form des jeweiligen Werkzeugelementes zur Einhaltung und/oder Korrektur von Fertigungstoleranzen während des Herstellungsprozesses in Abhängigkeit von den durch die Kommunikationseinheit empfangenen Prozessparametern anderer Werkzeugelemente anzusteuern.

6. Formwerkzeug nach Anspruch 5, **dadurch gekennzeichnet, dass** das Mittel zur Veränderung der Form eines Werkzeugelementes mindestens ein Piezoaktuator ist.

7. Formwerkzeug (1) nach einem der Ansprüche 3 bis 6, **dadurch gekennzeichnet, dass** zumindest ein Teil der Werkzeugelemente jeweils Mittel zur Temperierung des Werkzeugelementes aufweisen und die Steuereinheit der jeweiligen Werkzeugelemente eingerichtet ist, die Mittel zur Temperierung des jeweiligen Werkzeugelementes während des Herstellungsprozesses in Abhängigkeit von den durch die Kommunikationseinheit empfangenen Prozessparametern anderer Werkzeugelemente anzusteuern.

8. Formwerkzeug (1) nach Anspruch 7, **dadurch gekennzeichnet, dass** die Werkzeugelemente zumindest in Teilbereichen jeweils einen Hohlraum mit einem verschließbaren Einströmventil, über das der Hohlraum mit der Umgebung kommunizierend verbindbar ist, als Mittel zur Temperierung haben.

9. Verfahren zur Herstellung eines Faserverbundbauteils, bei dem ein Faserhalbzeug in ein Formwerkzeug eingebracht und das mit einem Matrixharz infiltrierte Faserhalbzeug in dem Formwerkzeug ausgehärtet wird, mit den Schritten:
a) Bereitstellen eines Formwerkzeuges (1) mit einer Mehrzahl von separaten Werkzeugelementen, die zumindest zur teilweisen Formgebung des herzustellenden Faserverbundbauteils vorgesehen sind, wobei die Werkzeugelemente (3, 4) jeweils ein Sensorsystem mit wenigstens einem Sensor und jeweils eine Kommunikationseinheit aufweisen,
b) Zusammensetzen der Werkzeugelemente (3, 4) zu dem Formwerkzeug entsprechend der Form des herzustellenden Faserverbundbauteils und Einbringen des Faserhalbzeuges in das Formwerkzeug,
c) Erfassen von herstellungs- und/oder bauteilrelevanten Prozessparametern während des Herstellungsprozesses des Faserverbundbauteils durch den wenigstens einen Sensor (6) des Sensorsystems des jeweiligen Werkzeugelementes, und **gekennzeichnet dadurch, dass** jedes Werkzeugelement eine Kommunikationseinheit (7) aufweist, und durch
d) Aussenden der erfassten Prozessparameter an andere Werkzeugelemente mittels der Kommunikationseinheit (7) des jeweiligen Werkzeugelementes und/oder Empfangen von Prozessparametern anderer Werkzeugelemente, die von den jeweiligen Kommunikationseinheiten der anderen Werkzeugelemente (3, 4) ausgesendet wurden.

10. Verfahren nach Anspruch 9, **dadurch gekennzeichnet, dass** ein Formwerkzeug (1) bereitgestellt wird, bei dem zumindest ein Teil der Werkzeugelemente (3, 4) jeweils Mittel zur Beeinflussung mindestens eines herstellungs- und/oder bauteilrelevanten Prozessparameters und eine Steuereinheit (8) aufweisen, wobei während des Herstellungsprozesses der mindestens eine herstellungs- und/oder bauteilrelevanten Prozessparameter in Abhängigkeit von den durch die Kommunikationseinheit (7) empfangenen Prozessparameter anderer Werkzeugelemente durch Ansteuerung der Mittel durch die jeweilige Steuereinheit (8) beeinflusst wird.

11. Verfahren nach Anspruch 10, **dadurch gekennzeichnet, dass** ein Form-werkzeug (1) bereitgestellt wird, bei dem zumindest ein Teil der Werkzeugelemente (3, 4) jeweils Mittel zur Veränderung der Form des jeweiligen Werk-zeugelementes aufweisen, wobei zur Korrektur von Fertigungstoleranzen während des Herstellungsprozesses die Form des jeweiligen Werkzeugelementes in Abhängigkeit von den durch die Kommunikationseinheit (7) empfangenen Prozessparameter anderer Werkzeugelemente (3, 4) durch Ansteuerung der Mittel durch die jeweilige Steuereinheit (8) verändert wird.

12. Verfahren nach Anspruch 10 oder 11, **dadurch gekennzeichnet, dass** ein Formwerkzeug (1) bereitgestellt wird, bei dem zumindest ein Teil der Werkzeugelemente (3, 4) jeweils Mittel zur Temperierung des jeweiligen Werkzeugelementes aufweisen, wobei während des Herstellungsprozesses die Werkzeugelemente in Abhängigkeit von den durch die Kommunikationseinheit empfangenen Prozessparameter anderer Werkzeugelemente durch Ansteuerung der Mittel durch die jeweilige Steuereinheit temperiert werden.

## Claims

1. Moulding tool (1) for producing a fibre composite component, having a multiplicity of separate tool elements (3, 4) which are provided at least for partially shaping the fibre composite component to be produced and which can be placed together, correspondingly to the shape of the fibre composite component to be produced, to form the moulding tool (1), wherein the tool elements (3, 4) each have a sensor system with at least one sensor (6) which is designed to detect production-relevant and/or component-relevant process parameters during the production of the fibre composite component, **characterized in that** the tool elements (3, 4) each have a communication unit (7) which is designed to transmit detected process parameters to communication units (7) of other tool elements (3, 4) and/or to receive detected process parameters of other tool elements (3, 4) that have been transmitted by the respective communication units (7) of the other tool elements (3, 4).

2. Moulding tool (1) according to Claim 1, **characterized in that** the sensor (6) of the respective sensor systems of the tool elements (3, 4) is designed to detect, as production-relevant and/or component-relevant process parameters, the temperature, the pressure, the leak-tightness with respect to the surroundings, the position of the tool element in the moulding tool, the orientation of the tool element in the moulding tool, the number of laid fibrous layers and/or a change in the geometry of the tool element.

3. Moulding tool (1) according to Claim 1 or 2, **characterized in that** at least some of the tool elements (3, 4) each have means (9) for influencing at least one production-relevant and/or component-relevant process parameter, and have a control unit (8) which is designed to actuate the means of the respective tool element (3, 4) in a manner dependent on the process parameters of other tool elements, as received by the communication unit (7), in order to influence the at least one production-relevant and/or component-relevant process parameter.

4. Moulding tool (1) according to Claim 3, **characterized in that** the control units (8) of the tool elements (3, 4) interact with one another via the communication units (7) such that the means (9) of the tool elements (3, 4) jointly influence the production-relevant and/or component-relevant process parameters for the purposes of adherence to and/or correction of manufacturing tolerances.

5. Moulding tool (1) according to Claim 3 or 4, **characterized in that** at least some of the tool elements (3, 4) each have means (9) for changing the shape of the tool element (3, 4), and the control unit of the respective tool elements is designed to actuate the means, in order to change the shape of the respective tool element for the purposes of adherence to and/or correction of manufacturing tolerances during the production process, in a manner dependent on the process parameters of other tool elements, as received by the communication unit.

6. Moulding tool according to Claim 5, **characterized in that** the means for changing the shape of a tool element is at least one piezo actuator.

7. Moulding tool (1) according to one of Claims 3 to 6, **characterized in that** at least some of the tool elements each have means for controlling the temperature of the tool element, and the control unit of the respective tool elements is designed to actuate the means for controlling the temperature of the respective tool element during the production process in a manner dependent on the process parameters of other tool elements, as received by the communication unit.

8. Moulding tool (1) according to Claim 7, **characterized in that** the tool elements, at least in sub-regions, each have a cavity with a closable inflow valve, via which the cavity can be connected in communicating fashion to the surroundings, as means for temperature control.

9. Method for producing a fibre composite component, in which method a fibrous semifinished product is placed into a moulding tool and the fibrous semifinished product, which has been infiltrated with a matrix resin, is cured in the moulding tool, having the steps:
a) providing a moulding tool (1) having a multiplicity of separate tool elements which are provided at least for partially shaping the fibre composite component to be produced, wherein the tool elements (3, 4) each have a sensor system with at least one sensor and in each case one communication unit,
b) placing the tool elements (3, 4) together to form the moulding tool corresponding to the shape of the fibre composite component to be produced, and introducing the fibrous semifinished product into the moulding tool,
c) detecting production-relevant and/or component-relevant process parameters during the process of production of the fibre composite component by means of the at least one sensor (6) of the sensor system of the respective tool element, **characterized in that** each tool element has a communication unit (7), and by
d) transmitting the detected process parameters to other tool elements by means of the communication unit (7) of the respective tool element and/or receiving process parameters of other tool elements that have been transmitted by the respective communication units of the other tool elements (3, 4).

10. Method according to Claim 9, **characterized in that** a moulding tool (1) is provided in which at least some of the tool elements (3, 4) each have means for influencing at least one production-relevant and/or component-relevant process parameter, and have a control unit (8), wherein, during the production process, the at least one production-relevant and/or component-relevant process parameter is influenced, through actuation of the means by the respective control unit (8), in a manner dependent on the process parameters of other tool elements, as received by the communication unit (7).

11. Method according to Claim 10, **characterized in that** a moulding tool (1) is provided in which at least some of the tool elements (3, 4) each have means for changing the shape of the respective tool element, wherein, for the purposes of correction of manufacturing tolerances during the production process, the shape of the respective tool element is changed, through actuation of the means by the respective control unit (8), in a manner dependent on the process parameters of other tool elements (3, 4), as received by the communication unit (7).

12. Method according to Claim 10 or 11, **characterized in that** a moulding tool (1) is provided in which at least some of the tool elements (3, 4) each have means for controlling the temperature of the respective tool element, wherein, during the production process, the tool elements are temperature-controlled, through actuation of the means by the respective control unit, in a manner dependent on the process parameters of other tool elements, as received by the communication unit.

## Revendications

1. Outil de formage (1) destiné à fabriquer un composant composite en fibres, comprenant une pluralité d'éléments d'outil (3, 4) séparés qui sont conçus au moins pour façonner partiellement le composant composite en fibres à fabriquer et peuvent être assemblés en l'outil de formage (1) conformément à la forme du composant composite en fibres à fabriquer, les éléments d'outil (3, 4) possédant respectivement un système de détection doté d'au moins un capteur (6) qui est configuré pour collecter des paramètres de processus pertinents pour la fabrication et/ou le composant lors de la fabrication du composant composite en fibres, **caractérisé en ce que** les éléments d'outil (3, 4) possèdent respectivement une unité de communication (7) qui est conçue pour envoyer les paramètres de processus collectés aux unités de communication (7) d'autres éléments d'outil (3, 4) et/ou pour recevoir les paramètres de processus collectés d'autres éléments d'outil (3, 4) qui ont été envoyés par les unités de communication (7) respectives des autres éléments d'outil (3, 4).

2. Outil de formage (1) selon la revendication 1, **caractérisé en ce que** le capteur (6) des systèmes de détection respectifs des éléments d'outil (3, 4) est conçu pour collecter, en tant que paramètres de processus pertinents pour la fabrication et/ou le composant, la température, la pression, l'étanchéité par rapport à l'environnement, la position de l'élément d'outil dans l'outil de formage, l'orientation de l'élément d'outil dans l'outil de formage, le nombre de couches de fibres déposées et/ou une modification de la géométrie de l'élément d'outil.

3. Outil de formage (1) selon la revendication 1 ou 2, **caractérisé en ce qu'**au moins une partie des éléments d'outil (3, 4) possède respectivement des moyens (9) destinés à influencer au moins un paramètre de processus pertinent pour la fabrication et/ou le composant et une unité de commande (8), laquelle est conçue pour commander les moyens de l'élément d'outil (3, 4) correspondant en fonction des paramètres de processus d'autres éléments d'outil reçus par l'unité de communication (7) en vue d'influencer l'au moins un paramètre de processus pertinent pour la fabrication et/ou le composant.

4. Outil de formage (1) selon la revendication 3, **caractérisé en ce que** les unités de commande (8) des éléments d'outil (3, 4) coopèrent entre elles par le biais des unités de communication (7) de telle sorte que les moyens (9) des éléments d'outil (3, 4) influencent en commun les paramètres de processus pertinents pour la fabrication et/ou le composant en vue de respecter et/ou de corriger des tolérances de fabrication.

5. Outil de formage (1) selon la revendication 3 ou 4, **caractérisé en ce qu'**au moins une partie des éléments d'outil (3, 4) possède respectivement des moyens (9) destinés à modifier la forme de l'élément d'outil (3, 4) et l'unité de commande des éléments d'outil respectifs est conçue pour commander les moyens destinés à modifier la forme de l'élément d'outil respectif en vue de respecter et/ou de corriger des tolérances de fabrication pendant le processus de fabrication en fonction des paramètres de processus d'autres éléments d'outil reçus par l'unité de communication.

6. Outil de formage selon la revendication 5, **caractérisé en ce que** les moyens destinés à modifier la forme d'un élément d'outil sont au moins un actionneur piézoélectrique.

7. Outil de formage (1) selon l'une des revendications 3 à 6, **caractérisé en ce qu'**au moins une partie des éléments d'outil possède respectivement des moyens destinés à l'équilibrage thermique de l'élément d'outil et l'unité de commande des éléments d'outil respectifs est conçue pour commander les moyens destinés à l'équilibrage thermique de l'élément d'outil correspondant pendant le processus de fabrication en fonction des paramètres de processus d'autres éléments d'outil reçus par l'unité de communication.

8. Outil de formage (1) selon la revendication 7, **caractérisé en ce que** les éléments d'outil comprennent respectivement comme moyens destinés à l'équilibrage thermique, au moins dans des zones partielles, un espace creux muni d'une vanne d'admission pouvant être fermée, par le biais de laquelle l'espace creux peut être mis en liaison communiquante avec l'environnement.

9. Procédé de fabrication d'un composant composite en fibres, lors duquel un demi-produit en fibres est introduit dans un outil de formage et le demi-produit en fibres, infiltré par une résine formant matrice, est durci dans l'outil de formage, comprenant les étapes suivantes :
a) mise à disposition d'un outil de formage (1) comprenant une pluralité d'éléments d'outil séparés qui sont conçus au moins pour façonner partiellement le composant composite en fibres à fabriquer, les éléments d'outil (3, 4) possédant respectivement un système de détection doté d'au moins un capteur et respectivement une unité de communication,
b) assemblage des éléments d'outil (3, 4) en l'outil de formage conformément à la forme du composant composite en fibres à fabriquer et introduction du demi-produit en fibres dans l'outil de formage,
c) collecte de paramètres de processus pertinents pour la fabrication et/ou le composant pendant le processus de fabrication du composant composite en fibres par l'au moins un capteur (6) du système de détection de l'élément d'outil correspondant, et
**caractérisé en ce que** chaque élément d'outil possède une unité de communication (7), et par
d) l'envoi des paramètres de processus collectés à d'autres éléments d'outil au moyen de l'unité de communication (7) de l'élément d'outil correspondant et/ou la réception des paramètres de processus d'autres éléments d'outil qui ont été envoyés par les unités de communication respectives des autres éléments d'outil (3, 4).

10. Procédé selon la revendication 9, **caractérisé en ce qu'**un outil de formage (1) est mis à disposition, avec lequel au moins une partie des éléments d'outil (3, 4) possède respectivement des moyens destinés à influencer au moins un paramètre de processus pertinent pour la fabrication et/ou le composant et une unité de commande (8), l'au moins un paramètre de processus pertinent pour la fabrication et/ou le composant étant influencé pendant le processus de fabrication par une commande des moyens par l'unité de commande (8) correspondante en fonction des paramètres de processus d'autres éléments d'outil reçus par l'unité de communication (7).

11. Procédé selon la revendication 10, **caractérisé en ce qu'**un outil de formage (1) est mis à disposition, avec lequel au moins une partie des éléments d'outil (3, 4) possède respectivement des moyens destinés à modifier la forme de l'élément d'outil correspondant, la forme de l'élément d'outil respectif étant modifiée pendant le processus de fabrication par une commande des moyens par l'unité de commande (8) correspondante en fonction des paramètres de processus d'autres éléments d'outil (3, 4) reçus par l'unité de communication (7) en vue de corriger des tolérances de fabrication.

12. Procédé selon la revendication 10 ou 11, **caractérisé en ce qu'**un outil de formage (1) est mis à disposition, avec lequel au moins une partie des éléments d'outil (3, 4) possède respectivement des moyens destinés à l'équilibrage thermique de l'élément d'outil correspondant, l'équilibrage thermique étant effectué sur les éléments d'outil pendant le processus de fabrication par une commande des moyens par l'unité de commande correspondante en fonction des paramètres de processus d'autres éléments d'outil reçus par l'unité de communication.
